# EUROPEAN PATENT APPLICATION

(11) **EP 3 865 296 A1**
(43) Date of publication of application: **18.08.2021**
(21) Application number: 19889071.7
(22) Date of filing: 14.11.2019
(51) Int. Cl.: B32B 15/01, B32B 15/18

(54) **SUPER DUPLEX STAINLESS STEEL CLAD STEEL PLATE AND MANUFACTURING METHOD THEREFOR**

(30) Priority: 29.11.2018 CN 201811444072
(71) Applicant: BAOSHAN IRON & STEEL CO., LTD., Shanghai 201900 (CN)
(72) Inventor: LIANG, Xiaojun, Shanghai 201900 (CN); JIAO, Sihai, Shanghai 201900 (CN); DING, Jianhua, Shanghai 201900 (CN); YUAN, Xiangqian, Shanghai 201900 (CN); WANG, Zhiyu, Shanghai 201900 (CN); HAO, Yingmin, Shanghai 201900 (CN)
(74) Representative: Maiwald Patent- und Rechtsanwaltsgesellschaft mbH
(86) International application number: PCT/CN2019/118517
(87) International publication number: WO 2020/108317

(57) **Abstract**

Clad steel plate of super duplex stainless steel and manufacturing method thereof. The clad steel plate of super duplex stainless steel which has a two-layer structure wherein one layer is duplex stainless steel, and the other layer is carbon steel, wherein said duplex stainless steel comprises the following components by weight: C≤0.03%, Mn≤1.20%, Si≤0.80%, Cr: 24.0-26.0%, Ni: 6.0-8.0%, Mo: 3.0-5.0%, N: 0.24-0.32% and the balance being Fe and inevitable impurities; and said carbon steel comprises the following components by weight: C: 0.03∼0.12%, Si: 0.10∼0.45%, Mn: 0.70-1.60%,P<0.020%, S<0.025%, Cu: 0∼0.35%, Cr 0∼0.40%, Ni 0∼0.40%, Nb 0∼0.05%, Mo 0∼0.40%, Ti 0∼0.018%, A1 0.015∼0.045% and the balance being Fe and inevitable impurities. The clad steel plate of the disclosure has good structure strength and corrosion resistance; the clad steel plate is a rolled cladding steel plate and is capable of realizing the metallurgical bonding of cladding and base layer materials, thereby yielding good bonding capability.

## Description

### Technical Field

The present disclosure relates to the production technical field of corrosion-resistant clad steel plates, particularly to a clad steel plate of super duplex stainless steel and manufacturing method thereof.

### Background Art

Corrosion of materials can cause huge loss which involves various fields. Especially, as the society is developed and progressed, there are more and more varieties of chemicals involved in the industrial field or civil field, and uses are more and more wide, involving the fields of metallurgical industry, chemical industry, buildings, medicals, foods and the like. Therefore, various corrosion-resistant precautions need to be made to these original storage, transport and applications.

Due to its high chromium and molybdenum contents and high pitting constant, the super duplex stainless steel is suitable for production and storage in phosphoric acid, sulfuric acid, nitric acid and other acid pickling environments and can be used in corrosion media containing chlorine ions, fluorine ions and the like. Furthermore, due to its characteristics of high yield and high tensile strength, the super duplex stainless steel is specifically suitable for use in environments having both corrosion-resistant requirements and wear-resisting requirements.

However, since the super duplex stainless steel is large in production difficulty and high in cost, its use and promotion are significantly limited.

### Summary of the Invention

The object of the disclosure is to provide a clad steel plate of super duplex stainless steel and manufacturing method thereof to yield good structure strength and corrosion resistance; the clad steel plate is a rolled clad steel plate and is capable of realizing the metallurgical bonding of cladding layer and base layer materials, thereby yielding a good bonding capability; the clad steel plate is suitable for use in environments having chlorine ion concentrations, such as seawater having a harsh corrosion requirement.

In order to achieve the above object, the technical solution of the disclosure is as follows:
A clad steel plate of super duplex stainless steel, which has a two-layer structure, wherein one layer is duplex stainless steel, and the other layer is carbon steel, wherein
said duplex stainless steel comprises the following components by weight: C≤0.03%, Mn≤ 1.20%, Si≤0.80%, Cr: 24.0-26.0%, Ni: 6.0-8.0%, Mo: 3.0-5.0%, N: 0.24-0.32%, P≤0.03%, S≤0.02% and the balance being Fe and inevitable impurities; and
said carbon steel comprises the following components by weight: C: 0.03∼0.12%, Si: 0.10∼0.45%, Mn: 0.70-1.60%, P: 0∼0.020%; S: 0∼0.025%, Cu: 0∼0.35%, Cr: 0∼0.40%, Ni: 0∼0.40%, Nb: 0∼0.05%, Mo: 0∼0.40%, Ti: 0∼0.018%, A1: 0.015∼0.045%, and the balance being Fe and inevitable impurities.

An interface between the duplex stainless steel and the carbon steel of the clad steel plate of the disclosure has a shear strength of 290 MPa or more, the clad steel plate has a yield strength of 300∼650 MPa and the clad steel plate has a tensile strength of 400∼900 MPa.

The carbon steel of the clad steel plate of the disclosure has a yield strength of 235∼550 MPa; the duplex stainless steel has a yield strength of 550 MPa or more and a tensile strength of 795 MPa or more.

In the component design of the clad steel plate of super duplex stainless steel of the disclosure:
C: C is an austenite stabilizing element, which plays a role of solid solution strengthening in the steel, and can significantly improve the strength of steel, but too high C content is unfavorable to welding property and toughness. In the disclosure, the balance between the property of the base material and the property of the cladding material is realized through a cooling control manner. The content of carbon in the carbon steel layer is controlled to be 0.03∼0.12%.

Si: Si is a deoxidizing element; in addition, Si is soluble in ferrite and plays a role of solid solution strengthening, which is second only to carbon, nitrogen and phosphorus but superior to other alloy elements. Therefore, Si can significantly improve the strength and hardness of steel. The content of Si in the carbon steel layer is controlled to be in a range of 0.10∼0.45%.

Mn: Mn can delay the transformation of pearlite, reduce the critical cooling rate and improve the hardenability of steel, and meanwhile has a solution strengthening effect on steel, and is a main solution strengthening element in steel. However, too-high Mn content easily causes segregation bands and martensites, which has an adverse effect on the toughness of steel. The content of Mn in the carbon steel layer is controlled to be in a range of 0.70∼1.60%.

Nb: Nb is an important addition element in microalloyed steel. Nb together with nitrogen and carbon easily forms precipitates such as niobium nitride, niobium carbonitride and niobium carbide. In the process of heating billet steel, niobium can take an effect of refining austenite grains in steel. Nb can greatly increase the temperature of a non-recrystallization region, and has an obvious effect on rolling control, grain refining and strength toughness control. Moreover, Nb can form nano-scale precipitates, which is helpful to improve the strength. However, the addition of niobium easily causes mixed recrystallized grain size, and too much niobium has an adverse effect on toughness. Therefore, the addition amount of niobium in the disclosure is controlled to be in a range of 0∼0.05%.

Ti: Ti together with C and N in steel forms titanium carbide, titanium nitride or titanium carbonitride. At the stage of heating and rolling billet steel, Ti can play a role of refining austenite grains, thereby improving the strength and toughness of steel. However, too much Ti can form more bulky titanium nitride, which is harmful to the strength and toughness of steel. Therefore, the upper limit of Ti content in the carbon steel layer is controlled to be 0.018%.

Ni: in steel, Ni is only soluble in matrix ferrite and austenite, and does not form carbides, the austenite stabilization effect is extremely strong. In addition, the Ni element can also improve low-temperature toughness of steel. Therefore, in the disclosure, the addition amount of Ni in the carbon steel layer is controlled to be within 0.40%.

Cu: Cu mainly exists in the forms of solid solution and elemental phase precipitates in steel, and Cu being in solid solution plays a role of solid solution strengthening; because the solid solubility of Cu in ferrite decreases rapidly with the reduction of temperature, at lower temperature, the supersaturated Cu being in solid solution is precipitated in the form of elementary substance, which plays a role of strengthening precipitation. In addition, addition of a small amount of Cu in the carbon steel layer can significantly improve the atmospheric corrosion resistance of the clad steel plate. Therefore, it is considered to appropriately add the Cu element in the carbon steel layer according to actual use environments.

Cr: Cr can shrink austenite phase zone,, is a medium strong carbide element, and is also soluble in ferrite. Cr improves the stability of austenite and makes the C curve shift toward the right, so it can reduce the critical cooling rate and improve the hardenability of steel. Cr also reduces the austenite transformation temperature, makes (Fe, Cr)₃C, (Fe, Cr)₇C₃ and (Fe, Cr)₂₃C₇ and other formed carbides precipitate at a lower temperature, causes microstructures and carbides to be refined, and can significantly improve the strength and hardness of steel. However, Cr has an adverse effect on the toughness of steel. Based on the above factors, the content of Cr in the carbon steel layer is controlled to be within 0.40%.

Mo: molybdenum shrinks austenite phase zone. It can improve the hardenability and heat strength of steel. Molybdenum together with carbon element forms carbide element. Molybdenum has good tempering stability. Molybdenum has a solid solution strengthening effect on ferrite and meanwhile can improve the stability of carbides, and thus can improve the strength of steel. Molybdenum also has good corrosion resistance. In the stainless steel, the increase of molybdenum element can obviously improve the chloride pitting corrosion resistance of stainless steel.

Al: Al is a deoxidizing element, which can reduce the content of oxygen in molten steel. Moreover, bonding of Al with nitrogen in steel can take an effect of preventing growth of austenite grains.

The clad steel plate rolling method is to mainly use base layer carbon steel so as to ensure the structural strength and toughness through material design, thereby realizing the requirements of different strengths and toughness; the corrosion resistance and wear resistance of the material are mainly realized by stainless steel cladding layer. Therefore, the clad steel plate can utilize the advantages and avoid shortcomings through layered distribution to better realize the advantageous properties of two materials. In addition, due to high chromium, molybdenum and nitrogen contents, the duplex stainless steel easily forms a σ-phase intermetallic compound near 650∼1000°C, especially near 900°C. Because of high chromium and molybdenum contents, the σ phase is extremely fast formed, which leads to the decrease of toughness and reduction of corrosion resistance. In the process of rolling production, due to uneven temperature control, the edge and surface temperatures are lowered and easy to crack. Through the composite rolling process, the super duplex stainless steel can be used as a cladding layer material. The temperature uniformity of the cladding layer material can be ensured and the formation of the σ phase can be avoided through the design of composite billet assembling process.

The composite billet is composed of four-layer structure, the top and bottom layers are base layer carbon steel materials, the middle two layers are super duplex stainless steel, and the duplex stainless steel is separated by using a separating agent. The upper layer carbon steel is in direct contact with the surface of the duplex stainless steel without pollutants and surface oxides to form a vacuum billet; similarly, the lower layer carbon steel and the duplex stainless steel also form a group of vacuum billet. The two groups of vacuum billets are symmetrically stacked together, and the separating agent is filled between the two groups of vacuum billets of the duplex stainless steel, and then the two groups of vacuum billets constitute a group of vacuum billets to be rolled. This solution has the advantages: the four-layer combined billets are two relatively independent composite systems, and the two vacuum combined billets constitute a vacuum system. In this way, there are two protective barriers in the vacuum system. Even if the vacuum degree of the single composite system is reduced occasionally, the other composite system can still ensure the high vacuum degree required for the bonding of the clad steel plate, so as to effectively reduce the risk of vacuum loss that may occur in the process of composite rolling. The composite rolling in the single system vacuum method easily fails under the condition of vacuum loss, and therefore compared with the single system vacuum method, by using the method of the disclosure, the rolling success rate can be increased from 0% to 75% in the cases of welding joint failure and vacuum loss. In the process of rolling, the separating agent added between the surface of duplex stainless steel and the surface of duplex stainless steel plays a role of isolation. After rolling, the duplex stainless steel is cut and separated into finished clad steel plate being of two layers of separate structures.

A method of manufacturing clad steel plate of super duplex stainless steel according to the disclosure, comprising the following steps:
1) selecting the thicknesses of duplex stainless steel and carbon steel of a combined billet according to the expected thickness ratio of cladding layer and base layer of the clad steel plate; heating and cogging a continuous casting billet of the carbon steel to required size; cleaning the side of the carbon steel to be composited with the duplex stainless steel so as to expose the metal surface completely; and cleaning up the surface oxide scales and pollutants on the duplex stainless steel;
2) directly superposing the cleaned side of carbon steel with the cleaned side of duplex stainless steel, followed by vacuum welding and sealing at a vacuum degree of 0.001 Pa or less, wherein as a first vacuum control, a first vacuum barrier of two independent vacuum billets up and down are formed by carbon steel and duplex stainless steel; then stacking the vacuum billets such that side of duplex stainless steel opposes to side of duplex stainless surface and in symmetry along thickness direction; applying separating agent between the sides of duplex stainless steel surface for isolation; after stacking, welding and sealing at the peripheries of composite billets followed by vacuumizing to obtain a vacuum degree of 0.01 Pa or less, so that a second vacuum barrier is formed and a composite billet of four-layer structure is formed;
3) heating the composite billet with heating temperature controlled to be 1100∼1250°C;
4) rolling the composite billet with an initial rolling temperature of 1070∼1220°C and a final rolling temperature of 900∼1020°C;
5) after rolling, cooling the superposed clad steel plate with compressed air or water, wherein the initial cooling temperature is controlled as 880∼1000°C, the cooling rate is controlled as 2°C /sec∼40C/sec, and the final cooling temperature is controlled as 250∼680°C ; and
6) performing plasma cutting on the head and tail and edges of the rolled and superposed clad steel plate, so that the superposed clad steel plate is separated into two sets of finished clad steel plates in up-down symmetry.

Further, the method further comprises tempering thermal treatment with a tempering temperature of 500∼600°C, followed with air cooling treatment.

Preferably, in step 4), the pass reduction rate is controlled as 10% ∼25%.

In the method of manufacturing the clad steel plate of the disclosure:
The method of manufacturing the clad steel plate: selecting the thicknesses of duplex stainless steel and carbon steel of a combined billet according to the expected thickness ratio of cladding layer and base layer of the clad steel plate; heating and cogging a continuous casting billet of the carbon steel to required size; cleaning the side of the carbon steel to be composited with the duplex stainless steel so as to expose the metal surface completely; and cleaning up the surface oxide scales and pollutants on the duplex stainless steel; directly superposing the cleaned side of carbon steel with the cleaned side of duplex stainless steel, followed by vacuum welding and sealing at a vacuum degree of 0.001 Pa or less, wherein as a first vacuum control, a first vacuum barrier of two independent vacuum billets up and down are formed by carbon steel and duplex stainless steel; then stacking the vacuum billets such that side of duplex stainless steel opposes to side of duplex stainless surface and in symmetry along thickness direction; applying separating agent between the sides of duplex stainless steel surface for isolation; after stacking, welding and sealing at the peripheries of composite billets followed by vacuumizing to obtain a vacuum degree of 0.01 Pa or less.

Heating the composite billet with heating temperature controlled to be 1100∼1250°C. In the disclosure, the selection of the heating temperature comprehensively considers the physical characteristics of the duplex stainless steel and the carbon steel billet, and the heating temperature range on one hand ensures that the carbon steel has good mechanical properties after production, and on the other hand ensures that the carbides and intermetallic compounds that may exist in the duplex stainless steel have enough time for re-dissolution and re-diffusion at high temperature, and also guarantees that through phase transformation at high temperature, the phase proportion of the duplex stainless steel at high temperature can be controlled within a range of 40∼60%.

Rolling the composite billet with an initial rolling temperature of 1070∼1220°C and a final rolling temperature of 900∼1020°C. In order to ensure the plastic deformation of the material in the process of rolling, the metal atoms at the interface of the composite material are subjected to enough compressive stress to form mutual penetration through diffusion of atoms, so that the interface can achieve interatomic bonding and enough deformation, so that the interface can undergo several times of recrystallization. Preferably, the pass reduction rate is controlled to be in a range of 10∼25% to provide sufficient deformation storage energy for recrystallization or phase transformation.

After rolling, cooling the superposed clad steel plate with compressed air or water, wherein the initial cooling temperature is controlled as 880∼1000°C, the cooling rate is controlled as 2°C/sec∼0°C /sec, and the final cooling temperature is controlled as 250∼680°C.

Performing plasma cutting on the head and tail and edges of the rolled and superposed clad steel plate, so that the superposed clad steel plate is separated into two sets of finished clad steel plates in up-down symmetry.

The head and tail of the clad steel plate refer to the two ends of the clad steel plate in the length direction, and the edges refer to the two sides of the overlapped clad steel plate in the width direction.

For the clad steel plate with a high strength level requirement, according to the user's requirements for the delivery state, the composite billet with a low final cooling temperature (≤ 300°C) can also be properly matched with tempering thermal treatment. The tempering temperature can be 500∼600°C, so that the stress generated by the rapid cooling of the base material can be released, and better plasticity and toughness can be obtained. Meanwhile the short-time treatment at this temperature can ensure that the corrosion resistance of the clad stainless steel is hardly influenced. Air cooling is performed after tempering.

In this disclosure, the base layer material of the clad steel plate of super duplex stainless steel select carbon steel with a yield strength of 235∼550 MPa. The clad steel plate produced by the rolling process in this solution has a good bonding capability and a shear strength of 290 MPa or more.

The duplex stainless steel cladding in the clad steel plate has a yield strength of 550 MPa or more, and a tensile strength of 795 MPa or more. The properties of carbon steel can satisfy the requirements of different yield strengths such as yield strengths of 235, 345, 460 or 550 MPa or more through component design.

The clad steel plate produced by the disclosure has good mechanical properties, and the cladding layer material of the clad steel plate has excellent corrosion resistance.

The composite billet of the clad steel plate of the disclosure is rolled by using four-layer symmetrical assembled billets. The conventional assembling solution is that after two or four-layer assembled billets are superposed, the vacuum system is formed by welding and sealing upper and lower materials. For the alloy clad steel plate with high bonding strength requirement and high cost, the vacuum failure in the production process can lead to the failure of the upper and lower clad steel plates, resulting in greater economic loss and greater production risk.

The disclosure adopts a double-vacuum system method for production, which can ensure that the vacuum system in the clad steel plate can be maintained through the second system even after one vacuum is destroyed in the production process. The clad steel plate produced by the method of the disclosure has excellent bonding strength and good production stability. It is especially suitable for rolled clad steel plates with expensive cladding materials and high bonding performance requirements.

Therefore, compared with the prior art, the disclosure can bring two beneficial effects:
1. Use of a double-vacuum barrier rolling method can effectively improve and maintain a higher vacuum degree, and can effectively reduce the risk of vacuum failure during storage.
2. Through use of the existing single system vacuum billet assembling method, once the vacuum failure occurs in the billet assembly or rolling process, the whole group of composite billet will completely fail. The disclosure adopts the two-vacuum barrier rolling method, because even in the billet assembling process or rolling process, vacuum failure of one vacuum barrier appears, and the other vacuum barrier can still maintain a good vacuum system, which can effectively improve the yield of composite billet rolling. The high success rate of clad steel plate rolling can ensure the stability of production performance and obtain good economic benefits for the production of corrosion resistant alloy clad steel plate with high alloy content and high cost.

The clad steel plate of the super duplex stainless steel of the disclosure has the advantages of high strength, excellent corrosion resistance, good low temperature impact toughness and the like and is especially suitable for various environments with high corrosion resistance requirements, high chloride ion spot corrosion requirements, and certain wearing requirements, such as energy, chemical, marine, transportation, power generation, paper making, food and other industries.

### Brief Description of the Drawings

Fig. 1 is a sectional view of a structure of a composite billet of a clad steel plate of super duplex stainless steel according to the disclosure.
Fig.2 is a metallographic structure picture of a clad steel plate of super duplex stainless steel at the joint of a carbon steel layer and a duplex stainless steel layer according to the disclosure.

### Detailed Description of the Embodiments

Next, the disclosure will be further described in combination with embodiments and drawings.

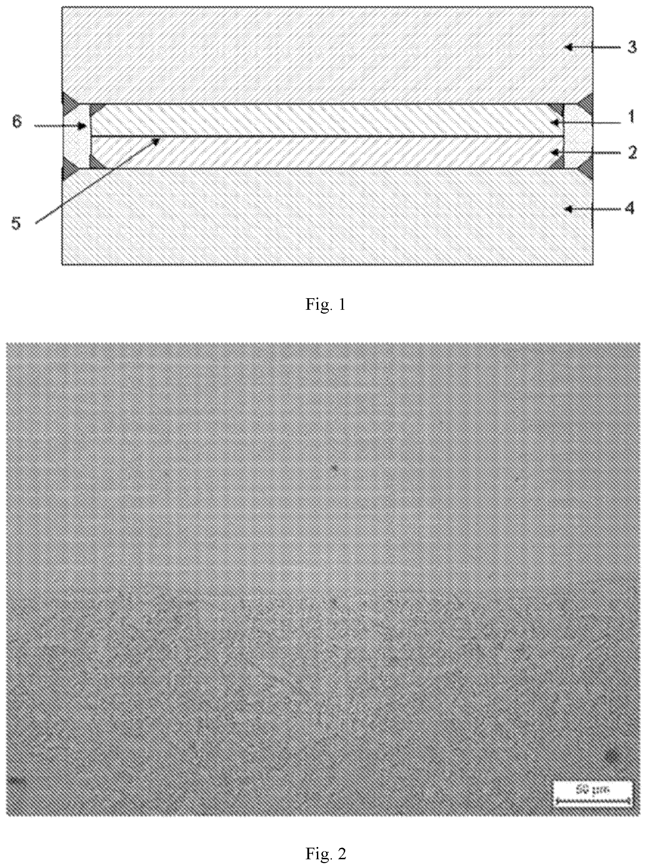

Referring to Fig. 1, the composite billet of the high-corrosion-resistant duplex stainless steel clad steel plate has a four-layer structure, in which the middle two layers 1 and 2 are duplex stainless steel, the upper and lower two layers 3 and 4 are carbon steel; 5 is separating agent, and 6 is closed sealing weld. The separating agent is used to separate two layers of stainless steel and prevent the adhesion between the two layers of stainless steel.

### Example 1

The base carbon steel has a yield strength of 235 MPa or more, and comprises the following chemical components (wt%): C: 0.032, Si: 0.20, Mn: 1.45, P: 0.015, S: 0.002, Al: 0.02, Cu: 0.01, Cr: 0.01, Ni: 0.01, Nb: 0.003, Mo: 0.01 and Ti: 0.003; the duplex stainless steel comprises the following components (wt%): C: 0.014, Si: 0.43, Mn: 0.85, Cr: 25.34, Ni: 7.32, Mo: 4.11, N: 0.30.

The four-layer symmetrical separation method as shown in Fig. 1 is used to assemble billets: a carbon steel billet, a duplex stainless steel billet, a duplex stainless steel billet and a carbon steel billet are arranged from top to bottom, in which the upper carbon steel billet and the corresponding duplex stainless steel billet are sealed in vacuum, and the lower carbon steel billet and the corresponding duplex stainless steel billet are sealed in vacuum, so as to form two groups of first vacuum systems independent to each other; the second vacuum system is formed by sealing between layer 1 and layer 2 (namely, carbon steel billet and carbon steel billet in this example) shown in Fig.1 in vacuum to jointly form a double-vacuum system composite billet. The separating agent is filled between the duplex stainless steel surface and the duplex stainless steel surface of two groups of vacuum billets, and then the vacuumized composite billets are rolled by heating and cut into the finished product clad steel plate. As shown in Fig. 2, photographing is performed with a 20 X objective lens using the Karl Zeiss optical microscope Axio Imager.M2m. The upper layer is of a super duplex stainless steel microstructure and the lower layer is of a carbon steel microstructure. The middle is the interface between duplex stainless steel and carbon steel, which has been formed a good metallurgical bonding.

Composite rolling: the heating temperature of 1190°C, the initial rolling temperature of 1170 °C, and the final rolling temperature of 950°C; after rolling, the composite billet is cooled directly by a water cooling method, the initial cooling temperature of 920°C, the cooling rate of 40 °C/s, and the final cooling temperature of 600°C, and then the composite billet is naturally cooled to room temperature in air. After rolling, the thickness of the clad steel plate subjected to plasma cutting is (5 + 30) mm, that is, the thickness of the clad duplex stainless steel is 5 mm and the thickness of the base carbon steel is 30 mm.

The mechanical properties of the clad steel plate are shown in Table 1. In Table 1, Rp0.2 is the yield strength of the full thickness clad steel plate, Rm is the tensile strength value of the clad steel plate, and A is the elongation of the clad steel plate sample, which reflects the comprehensive mechanical properties of the cladding layer and base layer materials of the clad steel plate. Due to the obvious low temperature sensitivity of carbon steel, a low temperature impact test is usually carried out on base layer carbon steel. As shown in Table 1, the impact property of the clad steel plate is good. Shear strength is a mechanical index to evaluate the bonding level of cladding layer and base layer materials. The shear strength values of three groups of data are all 290 MPa or more.

**Table 1 Mechanical properties of clad steel plate has a thickness of (5 + 30) mm**

| Tensile property (full-thickness clad steel plate (cladding layer + base layer) | | Impact energy (base layer carbon steel, J* | | Shear strength, MPa |
|---|---|---|---|---|
| Rp0.2, MPa | 367 | -40°C | 323 | 323 |
| Rm, MPa | 512 | | 347 | 378 |
| A, % | 29 | | 315 | 384 |

| | | | | |
|---|---|---|---|---|
| * The thickness × width × length 10 mm × 10 mm × 55 mm of the standard specification is used to test samples (the thickness of the base layer carbon steel is 10 mm). | | | | |

The cladding layer corrosion resistance of the clad steel plate is based on the ASTM A923C method. The cladding layer material is processed into samples with length and width of 50 mm * 25 mm. After the surface was cleaned, the samples were measured and weighed. Then the samples were immersed into 6% FeCl₃ solution at 40°C for 24 hours for corrosion test. After cleaning and drying, the samples were weighed. The weight-loss corrosion needed to satisfy the corrosion requirement that the corrosion rate was no more than 10 mdd. The intergranular corrosion test was carried out according to ASTM A262E method. The cladding material was processed into two samples with length and width of 80 mm * 20 mm. The surface was ground with a sandpaper, sensitized at 675 °C for 1 hour and immersed into boiled sulfuric acid-copper sulfate solution for 15 hours, and then the samples were taken for 180° bending test. The test results are shown in Table 2.

**Table 2 Cladding layer corrosion rest results of clad steel plate has a thickness of (5 + 30) mm**

| Cladding layer corrosion rest result | | | | | |
|---|---|---|---|---|---|
| Test method | Sample | Corrosion rate * | Test method | Sample | Test result |
| ASTM A923C method 40°C, 24h | 1 | 0.00 mdd | ASTM A262E method (No cracks on the surface by 10X observation after bending) | 1 | No cracks |
| | 2 | 0.00 mdd | | 2 | No cracks |

| | | | | | |
|---|---|---|---|---|---|
| * refers to the weight loss of corrosion per unit area per unit time. | | | | | |

### Example 2

The base layer carbon steel adopts carbon steel has a yield strength of 345 MPa, and comprises the following chemical components (wt%): C: 0.12, Si: 0.24, Mn: 0.70, P: 0.015, S: 0.003, Nb: 0.01, Ti: 0.01, Al: 0.025, and Cu, Cr, Ni and Mo are not deliberately added; the duplex stainless steel comprises the following components (wt%): C: 0.018, Si: 0.75, Mn: 0.88, Cr: 24.1, Ni: 6.05, Mo: 3.1, and N: 0.24.

In this example, the four-layer symmetric separation method which is the same as that in example 1 is used to assemble billets according to the above component system.

Composite rolling: the heating temperature of 1250°C, the initial rolling temperature of 1220°C, and the final rolling temperature of 1020°C; after rolling, the composite billet is cooled directly by using compressed air, the initial cooling temperature of 1000°C, the cooling rate of 2°C/s, and the final cooling temperature of 680°C, and then the composite billet is naturally cooled to room temperature in air. After rolling, the thickness of the clad steel plate subjected to plasma cutting is (3 + 10) mm, that is, the thickness of the cladding layer duplex stainless steel is 3 mm and the thickness of the base layer carbon steel is 10 mm.

The mechanical properties of the clad steel plate are shown in Table 3. In Table 3, Rp0.2 is the yield strength of the full thickness clad steel plate, Rm is the tensile strength value of the clad steel plate, and A is the elongation of the clad steel plate sample, which reflects the comprehensive mechanical properties of the cladding layer and base layer materials of the clad steel plate. Due to the obvious low temperature sensitivity of carbon steel, a low temperature impact test is usually carried out on base layer carbon steel. Since the base layer carbon steel has the original thickness of 10 mm, and cannot be processed into a sample having a thickness of 10 mm, the base layer carbon steel having a thickness of 7.5 mm is used as an impact sample. Shear strength is a mechanical index to evaluate the bonding level of cladding layer and base layer materials. The shear strength values of three groups of data are all 290 MPa or more.

**Table 3 Mechanical properties of clad steel plate has a thickness of (3 + 10) mm**

| Tensile property (full thickness clad steel plate (cladding layer+ base layer) | | Impact energy (base layer carbon steel, J* | | Shear strength, MPa |
|---|---|---|---|---|
| Rp0.2, MPa | 481 | 0°C | 134 | 433 |
| Rm, MPa | 649 | | 142 | 451 |
| A, % | 24 | | 151 | 413 |

| | | | | |
|---|---|---|---|---|
| * The thickness × width × length 7.5mm×10mm×55mm of the standard specification is used to test samples (the thickness of the base layer carbon steel is 7.5 mm). | | | | |

The cladding layer corrosion resistance of the clad steel plate is based on the ASTM A923C method. The cladding layer material is processed into samples with length and width of 50 mm * 25 mm. After the surface is cleaned, the samples were measured and weighed. Then the samples were immersed into 6% FeCl₃ solution at 40 °C for 24 hours for corrosion test. After cleaning and drying, the samples were weighed. The weight-loss corrosion needed to satisfy the corrosion requirement that the corrosion rate was no more than 10 mdd. The intergranular corrosion test was carried out according to ASTM A262E method. The cladding material was processed into two samples with length and width of 80 mm * 20 mm. The surface was ground with sandpaper, sensitized at 675°C for 1 hour and immersed into boiled sulfuric acid-copper sulfate solution for 15 hours, and then the samples were taken for 180° bending test. The test results are shown in Table 4.

**Table 4 Cladding layer corrosion rest results of clad steel plate has a thickness of (3 + 10 mm**

| Cladding layer corrosion rest result | | | | | |
|---|---|---|---|---|---|
| Test method | Sample | Corrosion rate* | Test method | Sample | Test result |
| ASTM A923C method 40°C, 24h | 1 | 1.17 mdd | ASTM A262E method | 1 | No cracks |
| | 2 | 1.76 mdd | (No cracks on the surface by 10X observation after bending) | 2 | No cracks |

| | | | | | |
|---|---|---|---|---|---|
| * refers to the weight loss of corrosion per unit area per unit time. | | | | | |

### Example 3

The base layer carbon steel adopts carbon steel has a yield strength of 460 MPa, and comprises the following chemical components (wt%): C: 0.09, Si: 0.22, Mn: 0.9, P: 0.013; S: 0.002, Nb: 0.045, Ti: 0.018, Cu: 0.01, Cr: 0.22, and Ni: 0.23; the duplex stainless steel comprises the following components (wt%): C: 0.016, Si: 0.40, Mn: 0.92, Cr: 25.97, Ni: 7.96, Mo: 4.98, and N: 0.32.

In this example, the four-layer symmetric separation method which is the same as that in example 1 is used to assemble billets according to the above component system.

Composite rolling: the heating temperature of 1100°C, the initial rolling temperature of 1070°C, and the final rolling temperature of 900°C; after rolling, the composite billet is cooled directly by water cooling, the initial cooling temperature of 880°C, the cooling rate of 20°C/s, and the final cooling temperature of 550°C, and then the composite billet is naturally cooled to room temperature in air. After rolling, the thickness of the clad steel plate subjected to plasma cutting is (2 + 8) mm, that is, the thickness of the clad duplex stainless steel is 2 mm and the thickness of the base carbon steel is 8 mm.

The mechanical properties of the clad steel plate are shown in Table 5. In Table 5, Rp0.2 is the yield strength of the full thickness clad steel plate, Rm is the tensile strength value of the clad steel plate, and A is the elongation of the clad steel plate sample, which reflects the comprehensive mechanical properties of the cladding layer and base layer materials of the clad steel plate. Due to the obvious low temperature sensitivity of carbon steel, a low temperature impact test is usually carried out on base layer carbon steel. Since the base layer carbon steel has the original thickness of 10 mm, and cannot be processed into a sample having a thickness of 10 mm, the base carbon steel having a thickness of 7.5 mm is used as an impact sample. Shear strength is a mechanical index to evaluate the bonding level of cladding layer and base layer materials. The shear strength values of three groups of data are all 290 MPa or more.

**Table 5 Mechanical properties of clad steel plate has a thickness of (2 + 8) mm**

| Tensile property (full thickness clad steel plate (cladding layer+ base layer) | | Impact energy (base layer carbon steel, J* | | Shear strength, MPa |
|---|---|---|---|---|
| Rp0.2, MPa | 542 | -20°C | 234 | 503 |
| Rm, MPa | 680 | | 231 | 521 |
| A, % | 24 | | 244 | 490 |

| | | | | |
|---|---|---|---|---|
| * The thickness × width × length 7.5mm×10mm×55mm of the standard specification is used to test samples (the thickness of the base layer carbon steel is 7.5 mm). | | | | |

The cladding layer corrosion resistance of the clad steel plate is based on the ASTM A923C method. The cladding layer material is processed into samples with length and width of 50 mm * 25 mm. After the surface is cleaned, the samples were measured and weighed. Then the samples were immersed in 6% FeCl₃ solution at 40°C for 24 hours for corrosion test. After cleaning and drying, the samples were weighed. The weight-loss corrosion needed to satisfy the corrosion requirement that the corrosion rate was no more than 10 mdd. The intergranular corrosion test was carried out according to ASTM A262E method. The cladding material was processed into two samples with length and width of 80 mm * 20 mm. The surface was ground with sandpaper, sensitized at 675°C for 1 hour and immersed into boiled sulfuric acid-copper sulfate solution for 15 hours, and then the samples were taken for 180° bending test. The test results are shown in Table 6.

**Table 6 Cladding layer corrosion rest results of clad steel plate has a thickness of (2 + 8) mm**

| Cladding layer corrosion rest result | | | | | |
|---|---|---|---|---|---|
| Test method | Sample | Corrosion rate* | Test method | Sample | Test result |
| ASTM A923C method 40°C, 24h | 1 | 0.00mdd | ASTM A262E method (No cracks on the surface by 10X observation after bending) | 1 | No cracks |
| | 2 | 0.35mdd | | 2 | No cracks |

| | | | | | |
|---|---|---|---|---|---|
| * refers to the weight loss of corrosion per unit area per unit time. | | | | | |

### Example 4

The base layer carbon steel adopts carbon steel has a yield strength of 550 MPa, and comprises the following chemical components (wt%): C: 0.07, Si: 0.32, Mn: 1.55, P: 0.012; S: 0.002, Cu: 0.35, Cr: 0.39, Ni: 0.40, Nb: 0.05, and Ti: 0.018; the duplex stainless steel comprises the following components (wt%): C: 0.016, Si: 0.72, Mn: 0.89, Cr: 25.69, Ni: 7.11, Mo: 3.93 and N: 0.29.

In this example, the four-layer symmetric separation method which is the same as that in example 1 is used to assemble billets according to the above component system.

Composite rolling: the heating temperature of 1150 °C, the initial rolling temperature of 1110°C, and the final rolling temperature of 990°C; after rolling, the composite billet is cooled directly by water cooling, the initial cooling temperature of 970°C, the cooling rate is 40°C/s, and the final cooling temperature of 250°C, and then the composite billet is naturally cooled to room temperature in air and tempered for 1 hour at a tempering temperature of 550°C, subsequently is discharged from the furnace to be cooled in the air to room temperature. After rolling, the thickness of the clad steel plate subjected to plasma cutting was (3 + 12) mm, that is, the thickness of the clad duplex stainless steel is 3 mm and the thickness of the base carbon steel is 12 mm. The mechanical properties of the clad steel plate are shown in Table 7.

The mechanical properties of the clad steel plate are shown in Table 7. In Table 7, Rp0.2 is the yield strength of the full thickness clad steel plate, Rm is the tensile strength value of the clad steel plate, and A is the elongation of the clad steel plate sample, which reflects the comprehensive mechanical properties of the cladding layer and base layer materials of the clad steel plate. Due to the obvious low temperature sensitivity of carbon steel, a low temperature impact test is usually carried out on base layer carbon steel. As shown in Fig.7, the clad steel plate has a good impact property. Shear strength is a mechanical index to evaluate the bonding level of cladding layer and base layer materials. The shear strength values of three groups of data are all 290 MPa or more.

**Table 7 Mechanical properties of clad steel plate has a thickness of (3 + 12) mm**

| Tensile property (full thickness clad steel plate (cladding layer+ base layer) | | Impact energy (base layer carbon steel, J* | | Shear strength, MPa |
|---|---|---|---|---|
| Rp0.2, MPa | 618 | -20°C | 317 | 568 |
| Rm, MPa | 776 | | 287 | 576 |
| A, % | 23 | | 306 | 495 |

| | | | | |
|---|---|---|---|---|
| * The thickness × width × length 10mm×10mm×55mm of the standard specification is used to test samples (the thickness of the base layer carbon steel is 10 mm). | | | | |

The cladding layer corrosion resistance of the clad steel plate is based on the ASTM A923C method. The cladding layer material was processed into samples with length and width of 50 mm * 25 mm. After the surface is cleaned, the samples were measured and weighed. Then the samples were immersed in 6% FeCl₃ solution at 40°C for 24 hours for corrosion test. After cleaning and drying, the samples were weighed. The weight-loss corrosion needed to satisfy the corrosion requirement that the corrosion rate was no more than 10 mdd. The intergranular corrosion test was carried out according to ASTM A262E method. The cladding layer material was processed into two samples with length and width of 80 mm * 20 mm. The surface was ground with sandpaper, sensitized at 675°C for 1 hour and immersed into boiled sulfuric acid-copper sulfate solution for 15 hours, and then the samples were taken for 180° bending test. The test results are shown in Table 8.

**Table 8 Cladding laver corrosion rest results of clad steel plate has a thickness of (3 + 12) mm**

| Cladding layer corrosion rest result | | | | | |
|---|---|---|---|---|---|
| Test method | Sample | Corrosion rate* | Test method | Sample | Test result |
| ASTM A923C method 40°C, 24h | 1 | 0.37 mdd | ASTM A262E method | 1 | No cracks |
| | 2 | 0.81 mdd | (No cracks on the surface by 10X observation after bending) | 2 | No cracks |

| | | | | | |
|---|---|---|---|---|---|
| * refers to the weight loss of corrosion per unit area per unit time. | | | | | |

### Comparative example

The materials which are the same as those in example 2 are used to prepare a group of clad steel plates according to the same production process. Property comparison is made.

The base layer carbon steel adopts carbon steel having a yield strength of 345 MPa, and comprises the following chemical components (wt%): C: 0.12, Si: 0.24, Mn: 0.70, P: 0.015; S: 0.003, Nb: 0.01, Ti: 0.01, Al: 0.025, and Cu, Cr, Ni and Mo are not deliberately added; the duplex stainless steel comprises the following components (wt%): C: 0.018, Si: 0.75, Mn: 0.88, Cr: 24.1, Ni: 6.05, Mo: 3.1, and N: 0.24.

In this comparative example, according to the above component system, the common four-layer symmetrical separation method is used to assemble the billet, that is, the single vacuum system. A carbon steel billet, a duplex stainless steel billet, a duplex stainless steel billet and a carbon steel billet are arranged from top to bottom in order, and the separating agent is filled between the duplex stainless steel surface and the duplex stainless steel surface. Then the four-layer billets are soldered and sealed into a separate vacuum system at one time. The billet assembling efficiency of this method is higher, but only one vacuum system can be ensured through the welded joint.

Composite rolling: the heating temperature of 1250°C, the initial rolling temperature of 1220°C, and the final rolling temperature of 1020°C; after rolling, the composite billet is cooled directly by using compressed air, the initial cooling temperature of 1000°C, the cooling rate of 20°C/s, and the final cooling temperature of 680°C, and then the composite billet is naturally cooled to room temperature in air. After rolling, the thickness of the clad steel plate subjected to plasma cutting is (3 + 10) mm, that is, the thickness of the cladding layer duplex stainless steel is 3 mm and the thickness of the base layer carbon steel is 10 mm.

The mechanical properties of the clad steel plate are shown in Table 9. In Table 9, Rp0.2 is the yield strength of the full thickness clad steel plate, Rm is the tensile strength value of the clad steel plate, and A is the elongation of the clad steel plate sample, which reflects the comprehensive mechanical properties of the cladding layer and base layer materials of the clad steel plate. Due to the obvious low temperature sensitivity of carbon steel, a low temperature impact test is usually carried out on base layer carbon steel. Since the base layer carbon steel has the original thickness of 10 mm, and cannot be processed into a sample having a thickness of 10 mm, the base layer carbon steel having a thickness of 7.5 mm is used as an impact sample. Because the rolling process adopted in comparative example is the same as that in example 2, the tensile and impact properties of the clad steel plate provided in this comparative example are basically close to those in example 2. However, since the conventional composite billet is different from that in the billet assembling process of the disclosure, the shear strength value characterizing the bonding capability of the cladding layer and base layer of the clad steel plate is lower, and fluctuation is larger.

**Table 9 Mechanical properties of clad steel plate has a thickness of (3 + 10) mm**

| Tensile property (full thickness clad steel plate (cladding layer+ base layer) | | Impact energy (base layer carbon steel, J* | | Shear strength, MPa |
|---|---|---|---|---|
| Rp0.2, MPa | 466 | 0°C | 145 | 352 |
| Rm, MPa | 632 | | 148 | 273 |
| A, % | 25 | | 137 | 309 |

| | | | | |
|---|---|---|---|---|
| * The thickness × width × length 7.5mm×10mm×55mm of the standard specification is used to test samples (the thickness of the base layer carbon steel is 7.5 mm). | | | | |

The cladding layer corrosion resistance of the clad steel plate is based on the ASTM A923C method. The cladding layer material is processed into samples with length and width of 50 mm * 25 mm. After the surface is cleaned, the samples were measured and weighed. Then the samples were immersed in 6% FeCl₃ solution at 40 °C for 24 hours for corrosion test. After cleaning and drying, the samples were weighed. The weight-loss corrosion needed to satisfy the corrosion requirement that the corrosion rate was no more than 10 mdd. The intergranular corrosion test was carried out according to ASTM A262E method. The cladding layer material was processed into two samples with length and width of 80 mm * 20 mm. The surface was ground with sandpaper, sensitized at 675°C for 1 hour and immersed into boiled sulfuric acid-copper sulfate solution for 15 hours, and then the samples were taken for 180° bending test. The test results are shown in Table 10.

The corrosion test in this comparative example is compared with that in example 2, it can be seen from comparison results that due to adoption of the same rolling process, the cladding corrosion resistance material is almost not affected. The main difference between the two is from the bonding control capability of the cladding layer and base layer materials.

**Table 10 Cladding layer corrosion rest results of clad steel plate has a thickness of (3 + 10) mm**

| Cladding layer corrosion rest result | | | | | |
|---|---|---|---|---|---|
| Test method | Sample | Corrosion rate* | Test method | Sample | Test result |
| ASTM A923C method 40°C, 24h | 1 | 1.55 mdd | ASTM A262E method | 1 | No cracks |
| | 2 | 1.93 mdd | (No cracks on the surface by 10X observation after bending) | 2 | No cracks |

| | | | | | |
|---|---|---|---|---|---|
| * refers to the weight loss of corrosion per unit area per unit time. | | | | | |

**Table 11 Comparison of assembled billet rolling situations adopting conventional composite billet assembling process and composite billet assembling process in the disclosure**

| Process manner | Quantity of test assembled billets | Quantity of successfully rolled assembled billets | Success rate of rolling |
|---|---|---|---|
| Conventional process | 10 | 6 | 60% |
| Composite billet assembling process in the disclosure | 9 | 9 | 100% |

As shown in Table 11, comparison of assembled billet rolling situations adopting conventional billet assembling process and composite billet assembling process in the disclosure shows that the double-vacuum barrier rolling method is adopted for expensive corrosion-resistant alloy clad steel plate, such as duplex stainless steel. The quantity of test assembled billets is 9 groups, the quantity of successful rolling is 9 groups, and the rolling success rate reaches 100%. From the rolling success rate of the assembled billets, the rolling success rate of the composite assembled billet rolling process provided by the disclosure is significantly improved compared with that of the conventional composite assembled billet rolling process. Among them, the conventional composite billet assembling process is a once whole sealed welding single system vacuum billet assembling manner, which has high requirements for vacuum control process, and easily causes rolling failure and low yield. The billet assembling solution of the disclosure is a four-layer symmetrical separation method, that is, a double-vacuum system, and the rolling reliability can be considerably improved. According to comparison of assembled billet rolling situations in examples of the disclosure and comparative example in Table 11, the bonding property of the clad steel plate provided by the billet assembling solution of the disclosure is higher and more stable.

## Claims

1. A clad steel plate of super duplex stainless steel , which has a two-layer structure wherein one layer is duplex stainless steel, and the other layer is carbon steel, wherein
said duplex stainless steel comprises the following components by weight: C≤0.03% , Mn≤1.20% , Si≤0.80%, Cr: 24.0-26.0%, Ni: 6.0-8.0%, Mo: 3.0-5.0%, N: 0.24-0.32%, P≤0.03%, S≤0.02% and the balance being Fe and inevitable impurities; and
said carbon steel comprises the following components by weight: C: 0.03∼0.12%, Si: 0.10∼0.45%, Mn: 0.70-1.60%, P: 0∼0.020%; S: 0∼0.025%, Cu: 0∼0.35%, Cr: 0∼0.40%, Ni: 0∼0.40%, Nb: 0∼0.05%, Mo: 0∼0.40%, Ti: 0∼0.018%, Al: 0.015∼0.045%, and the balance being Fe and inevitable impurities.

2. The clad steel plate of super duplex stainless steel according to claim 1, wherein an interface between the duplex stainless steel and the carbon steel of the clad steel plate has a shear strength of 290 MPa or more, the clad steel plate has a yield strength of 300∼650 MPa and the clad steel plate has a tensile strength of 400∼900 MPa.

3. The clad steel plate of super duplex stainless steel according to claim 1 or 2, wherein the carbon steel of the clad steel plate has a yield strength of 235∼550 MPa; the duplex stainless steel has a yield strength of 550 MPa or more, and a tensile strength of 795 MPa or more.

4. A method of manufacturing clad steel plate of super duplex stainless steel according to any one of claims 1 to 3, comprising the following steps:
1) selecting the thicknesses of duplex stainless steel and carbon steel of a combined billet according to the expected thickness ratio of cladding layer and base layer of the clad steel plate; heating and cogging a continuous casting billet of the carbon steel to required size; cleaning the side of the carbon steel to be composited with the duplex stainless steel so as to expose the metal surface completely; and cleaning up the surface oxide scales and pollutants on the duplex stainless steel;
2) directly superposing the cleaned side of carbon steel with the cleaned side of duplex stainless steel, followed by vacuum welding and sealing at a vacuum degree of 0.001 Pa or less, wherein as a first vacuum control, a first vacuum barrier of two independent vacuum billets up and down are formed by carbon steel and duplex stainless steel; then stacking the vacuum billets such that side of duplex stainless steel opposes to side of duplex stainless surface and in symmetry along thickness direction; applying separating agent between the sides of duplex stainless steel surface for isolation; after stacking, welding and sealing at the peripheries of composite billets followed by vacuumizing to obtain a vacuum degree of 0.01 Pa or less, so that a second vacuum barrier is formed and a composite billet of four-layer structure is formed;
3) heating the composite billet with heating temperature controlled to be 1100∼1250°C;
4) rolling the composite billet with an initial rolling temperature of 1070∼1220°C and a final rolling temperature of 900∼1020°C;
5) after rolling, cooling the superposed clad steel plate with compressed air or water, wherein the initial cooling temperature is controlled as 880∼1000°C, the cooling rate is controlled as 2C/sec∼40C/sec, and the final cooling temperature is controlled as 250∼680°C; and
6) performing plasma cutting on the head and tail and edges of the rolled and superposed clad steel plate, so that the superposed clad steel plate is separated into two sets of finished clad steel plates in up-down symmetry.

5. The method of manufacturing the clad steel plate of super duplex stainless steel according to claim 4, further comprising tempering thermal treatment with a tempering temperature of 500∼600°C, followed with air cooling treatment.

6. The method of manufacturing the clad steel plate of super duplex stainless steel according to claim 4, wherein in step 4), the pass reduction rate is controlled as 10% ∼25%.
